Europäisches Patentamt

European Patent Office

Office européen des brevets

(19)

(11) Veröffentlichungsnummer: **0 282 752 B1**

# (12) EUROPÄISCHE PATENTSCHRIFT

(45) Veröffentlichungstag der Patentschrift: **25.09.91**

(51) Int. Cl.⁵: **A61C 1/05, A61C 1/08**

(21) Anmeldenummer: **88102381.6**

(22) Anmeldetag: **18.02.88**

(54) **Zahnärztliches Handstück.**

(30) Priorität: 26.02.87 DE 3706263
15.12.87 DE 3742497

(43) Veröffentlichungstag der Anmeldung:
21.09.88 Patentblatt 88/38

(45) Bekanntmachung des Hinweises auf die
Patenterteilung:
25.09.91 Patentblatt 91/39

(84) Benannte Vertragsstaaten:
AT CH DE FR IT LI

(56) Entgegenhaltungen:
EP-A- 0 012 872          EP-A- 0 029 860
EP-A- 0 029 863          EP-A- 0 185 290
DE-A- 853 494            DE-A- 2 636 373
GB-A- 2 029 232          US-A- 3 798 777
US-A- 4 568 284

(73) Patentinhaber: **Siemens Aktiengesellschaft**
**Wittelsbacherplatz 2**
**W-8000 München 2(DE)**

(72) Erfinder: **Schuss, Werner**
**Vom-Erthal-Strasse 44**
**W-6148 Heppenheim(DE)**
Erfinder: **Straihammer, Reinhard**
**Hambacher Tal 1**
**W-6148 Heppenheim(DE)**
Erfinder: **Goisser, Siegfried**
**Ketteler Strasse 36**
**W-6141 Einhausen(DE)**
Erfinder: **Beerstecher, Lutz, Dipl.-Ing.**
**Klappacherstrasse 102**
**W-6100 Darmstadt(DE)**

EP 0 282 752 B1

## Beschreibung

Die Erfindung bezieht sich auf ein zahnärztliches Handstück der aus den beiden Dokumenten EP-00 29 863 und EP-00 12 872 bekannten Gattung. Bei diesen Handstücken hat die Griffhülse die Aufgabe, einerseits die Außenkontur in bezug auf optisches Aussehen und Griffigkeit festzulegen, andererseits Aufnahmekörper zu sein für die im Innern gelagerten Triebwellen sowie die vom Versorgungsschlauch zum Kopfteil führenden Medienleitungen. Hierzu ist ein Grundkörper (Basisteil) vorgesehen, der eine axial verschiebbare Triebwellenachse und die dazugehörigen Lager sowie diverse Medienleitungen aufnimmt. Die Griffhülse ist unter Zwischenlage eines O-Ringes auf den Grundkörper aufgesetzt und mittels einer Rasteinrichtung dort lösbar gehaltert. Sie ist außerdem mit dem Kopfteil fest verbunden, kann also nach Lösung der Rasteinrichtung nur zusammen mit diesem vom Grundkörper getrennt werden. Die Griffhülse ist bei dieser Konstruktion nicht frei von Trag-, Halte- und Führungselementen für den Grundkörper sowie für die zwischen Grundkörper und Griffhülse angeordneten Medienleitungen. Demgemäß bedingt eine solche Anordnung einen vergleichsweise komplizierten Aufbau des Handstückes mit relativ hohem Fertigungsaufwand. Insbesondere ist zur Erstellung der Griffhülse ein relativ hoher Material- und Maschineneinsatz erforderlich. Dieser Aufwand ist insbesondere dadurch begründet, daß vergleichsweise viele Teile mit hoher Paßgenauigkeit vorzusehen sind, unter anderem, um die innenliegenden Führungskanäle vorsehen und die Innenteile der Griffhülse genau zueinander einpassen zu können. Des weiteren ist die Außenkontur der Griffhülse vergleichsweise aufwendig, was dann von Nachteil ist, wenn man Handstücke mit unterschiedlichen Konturen vorsehen möchte.

Der in der Ansprüchen 1, 7 und 10 angegebenen Erfindung liegt die Aufgabe zugrunde, demgegenüber eine Verbesserung zu schaffen und ein Handstück anzugeben, welches fertigungstechnisch weniger aufwendig und damit preiswerter zu erstellen ist, wobei im besonderen anzustreben ist, die Griffhülse sowie deren Zuordnung zum Grundkörper fertigungstechnisch zu vereinfachen, so daß es möglich ist, unter Verwendung gleicher Elemente (Griffhülsen oder Grundkörper) unterschiedliche Handstückversionen anbieten zu können.

Ein wesentliches Merkmal der Erfindung ist, daß die Griffhülse praktisch eine blanke, im wesentlichen nur die Außenkontur des Handstückes bestimmende Hülse ist, die keine Tragfunktion für Lager und Medienleitungen übernimmt, daß dagegen der Grundkörper ein voll funktionsfähiges Gebilde ist, welches mit sämtlichen Anschlüssen für die Medien versehen ist. Die Griffhülse braucht demnach nur eine Hüllfunktion zu erfüllen. Dadurch, daß die Griffhülse im wesentlichen nur an zwei Stellen, vorzugsweise an den Enden, am Grundkörper abgestützt ist und dazwischen mit dem Grundkörper praktisch keine Berührung hat, ist man hinsichtlich der Gestaltung des Innenaufbaus und auch der äußeren Kontur weitgehend ungebunden; außerdem ist eine bessere Isolierung der Wärme und des Körperschalles von den Antriebsteilen auf die Griffhülse gegeben.

Eine besonders gute Dämpfung von möglicherweise bei im Inneren des Handstückes angeordnetem Antrieb auftretenden Vibrationen und Laufgeräuschen läßt sich erzielen, wenn, gemäß einer vorteilhaften Ausführungsform, zur Abstützung der Griffhülse am Grundkörper elastische Elemente vorgesehen sind, welche die Griffhülse gegenüber dem Grundkörper axial und radial festlegen, so daß die Griffhülse praktisch 'schwimmend' am Grundkörper befestigt ist. Die Griffhülse ist vorteilhafterweise einteilig ausgebildet; sie kann jedoch auch aus mehreren Teilen bestehen, die im montierten Zustand zu einem Stück zusammengesetzt sind und so eine fest miteinander verbundene Einheit bilden.

Bei einem Handstück, welches in seinem Inneren eine Antriebseinheit (Elektro- oder Luftmotor, Airscalerantrieb etc.) enthält, ist die Griffhülse so ausgebildet, daß sie die Antriebseinheit übergreift.

Nachdem man durch den erfindungsgemäßen Aufbau des Handstückes bezüglich der Gestaltung der Außenkontur weitgehend frei ist, ist es vorteilhaft, einem Grundkörper mehrere Griffhülsen mit unterschiedlichen äußeren Konturen zuzuordnen, wodurch dem Behandler bei gleichem Innenaufbau des Handstückes hinsichtlich der äußeren Form unterschiedliche Handstücke angeboten werden können. Dies ist im besonderen deshalb von Bedeutung, weil oftmals hinsichtlich der Handhaltung und Präparationsart unterschiedliche Vorstellungen bezüglich der Handstückform bestehen. Diesen unterschiedlichen Vorstellungen kann damit mit vergleichsweise geringem Fertigungsaufwand entsprochen werden.

Die Griffhülse besteht vorteilhafterweise aus einer Titanlegierung; sie kann alternativ auch aus sterilisierbarem Kunststoff bestehen, der gegebenenfalls farbige Kennzeichnungen in Form von Einfärbungen aufweisen kann.

Mehrere Ausführungsbeispiele der Erfindung werden nachfolgend anhand der Zeichnung beschrieben.
Es zeigen:

Figur 1 ein komplettes zahnärztliches Handstück in schaubildlicher Darstellung,

Figur 2 den Innenaufbau des Handstückes in schaubildlicher Darstellung,

Figur 3 das in Figur 2 enthaltene Anschlußteil in schaubildlicher Darstellung,

Figur 4 die Griffhülse in schaubildlicher Darstellung,

Figuren 5 und 6 Querschnitte entlang der Linien 4 und 5 in Figur 3,

Figuren 7 und 8 weitere Ausführungsformen einer Griffhülse,

Figur 9 eine weitere Ausführungsform eines Teils eines Handstückes nach der Erfindung im Längsschnitt,

Figur 10 einen Ausschnitt von einer modifizierten Ausführung des Handstückes gemäß Figur 9.

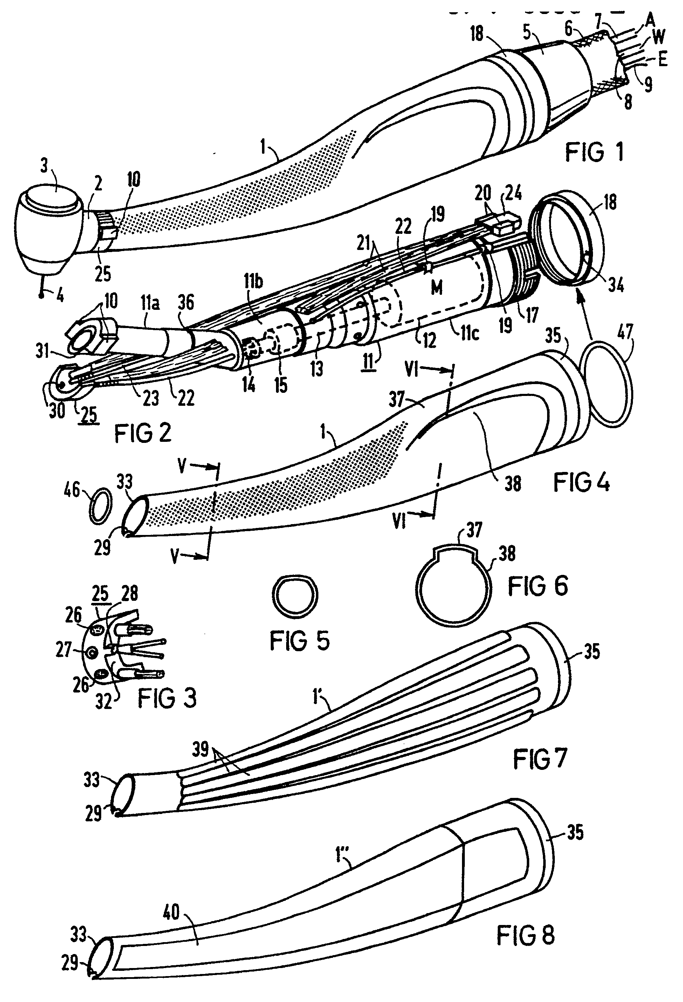

Die Figur 1 zeigt in einer schaubildlichen Darstellung ein komplettes zahnärztliches Handstück mit einer mit 1 bezeichneten Griffhülse, an derem vorderen Ende ein Kopfteil 2 mit einem Kopfgehäuse 3 gehaltert ist, welches in bekannter Weise ein Werkzeug 4 (Bohrer, Fräser od.dgl.) aufnimmt. Am anderen Ende der Griffhülse ist mittels einer Anschlußarmatur 5 ein Versorgungsschlauch 6 angeschlossen, in dem Medienleitungen 7 bis 9 für Luft (A), Wasser (W) und elektrische Energie (E) geführt sind.

Der Kopfteil 2 ist vom übrigen Teil des Handstückes trennbar, wozu eine nicht näher gezeigte, beispielsweise in der deutschen Patentanmeldung P 35 30 424 beschriebene Rasteinrichtung vorhanden ist, die mittels eines Betätigungsgliedes 10 betätigbar ist.

Die Figur 2 zeigt den Innenaufbau des Handstückes ohne Kopfteil 2, Griffhülse 1 und Schlauchanschluß 5, 6.

Ein Grundkörper 11 mit im Außendurchmesser abgesetzten Abschnitten 11a, 11b und 11c enthält in seinem Inneren einen Antriebsmotor 12 (Luftoder Elektromotor), ein oder mehrere Triebwellenabschnitte 13, eine Getriebeverzahnung 14, in die bei aufgesetztem Kopfteil 2 die Verzahnung eines Kopftriebes eingreift sowie Triebwellenlager 15.

An dem dem Kopfteil 2 abgewandten Ende ist der Grundkörper 11 mit einem Gewinde 17 versehen, auf dem ein Schraubring 18 aufschraubbar ist. Außen an der Peripherie des Grundkörpers sind mehrere, vorzugsweise klammerartige Abstütz- bzw. Halterungselemente 19, 20 vorgesehen, mit deren Hilfe einerseits ein sich in zwei Stränge aufteilendes Glasfaserbündel 21 und andererseits zwei Luft und Wasser an das Kopfteil 2 führende Medienleitungen 22, 23 am Grundkörper fixiert werden können. Das Glasfaserbündel 21 endet schlauchseitig in einem Endteil 24, dem korrespondierend in der Schlaucharmatur 5 eine über die Leitung 9 mit elektrischem Strom gespeiste Glühlampe gegenübersteht. Das Glasfaserbündel 21 ist am kopfteilseitigen Ende in einem Anschlußteil 25 gehalten, in dem auch die beiden Enden der Medienleitungen 22, 23 befestigt sind. Das Anschlußteil 25 ist hufeisenartig ausgebildet; seine äußere Mantelfläche setzt im montierten Zustand (Fig. 1) die äußere Kontur des Handstückes fort.

Wie aus Figur 3, die das Anschlußteil 25 in einer gegenüber der Darstellung nach Figur 2 gedrehten Ansicht schräg von der Unterseite aus zeigt, ersichtlich, beinhaltet dieses Anschlußteil zwei Austrittsöffnungen 26 für Licht und eine Austrittsöffnung 27 für Luft und Wasser. Das Anschlußteil 25 enthält ferner eine axial sich erstreckende Rastnase 28, die im montierten Zustand mit einem Axialschlitz 29 der in Figur 4 dargestellten Griffhülse eingreift und so eine Verdrehsicherung bildet.

Das Anschlußteil 25 weist einen Zapfen 30 auf, der in eine an der Unterseite des Grundkörpers 11 angeordnete Ausnehmung 31 eingreift und so einen Anschlag bildet. Die der Griffhülse zugewandte Stirnseite 32 (Fig. 3) liegt im montierten Zustand an der schrägen Stirnfläche 33 der Hülse 1 (Fig. 4) an.

Die Montage des Handstückes erfolgt in der Weise, daß, sofern es die Abmessungen erlauben, der Grundkörper 11 in seiner Gesamtheit, wie in Figur 2 dargestellt, durch die Hülse geschoben wird, sodann das Anschlußteil 25 durch Eingriff der Rastnase 28 in den Schlitz 29 verdrehsicher fixiert wird und anschließend durch Aufschrauben des Schraubringes 18 auf das Gewinde 17 der Grundkörper mit der Hülse 1 verspannt wird. Hierbei kommt ein Bund 34 des Schraubringes in eine dem Durchmesser dieses Bundes angepaßte Aufweitung 35 der Hülse zur Anlage. Bei fest eingeschraubtem Schraubring 18 ist demnach der Grundkörper fest mit der Hülse 1 verspannt.

Läßt sich aufgrund der Dimensionen der Grundkörper nicht als Ganzes durch die Hülse schieben, so ist es zweckmäßig, die beiden Grundkörperabschnitte 11a, 11b an der mit 36 bezeichneten Stelle trennbar auszubilden, wobei zur exakten Fixierung der Teile an der Verbindungsstelle entsprechende Mittel zur Verdrehsicherung sowie zur axialen Fixierung vorgesehen sind.

Aus dem Vorstehenden ergibt sich, daß der Grundkörper 11 ein voll funktionsfähiges Gebilde darstellt, die Griffhülse 1 dagegen keinerlei Teile trägt, vielmehr eine bloße Hüllfunktion hat. Demgemäß ist, wie die Querschnittsdarstellungen in Figuren 5 und 6 zeigen, die Hülse innen völlig frei von Rast- und Führungselementen sowie von Abstützelementen für die Medienleitungen. Wie bereits erläutert, stützt sich die Hülse 1 lediglich an beiden Enden am Grundkörper 11 ab; zwischen Grundkörper und Hülse ist ein Zwischenraum, in dem die Leitungen 21 bis 23 an sich beliebig verlegt sein können.

Die Figuren 7 und 8 zeigen zwei Varianten einer Griffhülse (1′ und 2″), die alternativ zu der in Figur 4 gezeigten auf den Grundkörper 11 aufsetzbar sind. Beide Griffhülsen sind lediglich hinsichtlich ihrer Abmessungen bezüglich den Positionen 29, 33 und 35 gleich mit der in Figur 4 gezeigten Ausführung; ansonsten sind die Konturen sehr unterschiedlich. So weist die Hülse nach Figur 4 im rückwärtigen Bereich einen Sattel 37 auf, der unter Bildung einer Einbuchtung 38 in eine nahezu kreisförmige Querschnittsform übergeht, während die Hülsen 1' und 1" längs verlaufende Abflachungen 39, 40 aufweisen, die von manchen Benutzern möglicherweise mehr geschätzt werden als eine aufgerauhte Oberfläche, wie sie bei der Hülse nach Figur 4 im vorderen Hülsenbereich vorgesehen ist.

Der erfindungsgemäße Handstückaufbau macht es also möglich, auf ein und demselben Grundkörper Griffhülsen mit hinsichtlich Handhaltung und Oberflächengestaltung unterschiedlicher Formgebung aufzusetzen. Die äußere Form und damit auch die Gebrauchstechnik kann demnach allein durch Auswechseln bzw. Wahl der passenden Griffhülse getroffen werden.

Die Hülsen haben eine im wesentlichen gleichbleibende, relativ dünne Wandstärke (ca. 0,2 bis 0,4 mm) und bestehen vorteilhafterweise aus einer Titan-Legierung oder aus sterilisierbarem Kunststoff. Im Falle einer Titan-Legierung ist es vorteilhaft, die Hülsen nach dem Verfahren der superplastischen Verformung zu fertigen, indem ein zweckmäßigerweise vorgebogenes Ausgangsrohr in ein der Form der betreffenden Hülse entsprechendes Gesenk eingelegt wird, wobei das eine Rohrende verschlossen wird und an das andere Ende ein Druckanschluß angesetzt wird, über den Gas mit einem bestimmten Druck dann eingegeben wird, wenn das im Gesenk befindliche Rohr so weit erhitzt ist, daß es unter Druck verformbar ist. Nach Verformung und Erkaltung wird der Hülsenrohling an den beiden Enden (Position 33 und 35) abgetrennt. Die Hülse liegt sodann im endfertigen Zustand vor. Dadurch, das das Hülsenmaterial im plastischen Verformungszustand unter Druck gegen die Konturen des Gesenkes angedrückt wird, läßt sich mit einem Arbeitsgang eine einwandfreie Oberflächengestaltung erzielen, die keine weitere Nachbearbeitung erforderlich werden läßt.

Alternativ zu einer Titan-Hülse kann die Hülse auch aus vorzugsweise sterilisierbarem Kunststoff, z.B. im Spritzverfahren, erstellt werden. In diesem Falle kann es vorteilhaft sein, bestimmte, das Handstück kennzeichnende farbige Markierungen bereits im Spritzgußverfahren durch entsprechende Einfärbungen vorzusehen.

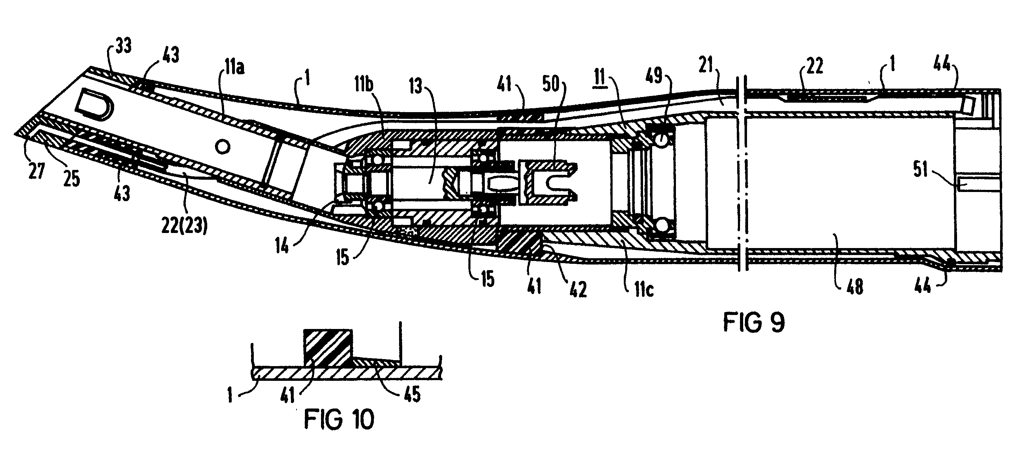

Um bei Verwendung insbesondere einer metallischen Griffhülse in Verbindung mit einem Antrieb im Handstück dafür zu sorgen, daß möglicherweise vom Antrieb ausgehende Vibrationen und Laufgeräusche, insbesondere Körperschall, nicht auf die Griffhülse übertragen werden können, wird vorgeschlagen, die Griffhülse 'schwimmend' am Grundkörper zu haltern. Eine diesbezügliche Ausführungsform ist in Figur 9 im Längsschnitt dargestellt. Soweit es sich um baulich gleiche Teile handelt, sind in der Figur dieselben Bezugszeichen verwendet wie im Ausführungsbeispiel gemäß Figuren 1 bis 4.

Während bei dem zuvor beschriebenen Ausführungsbeispiel die Abstützung der Griffhülse 1 am Grundkörper 11 dadurch erfolgte, daß mit Hilfe des auf den Grundkörper 11 aufschraubbaren Schraubringes 18 die Griffhülse mit ihrer schrägen Fläche 33 gegen das am Grundkörperabschnitt 11a axial rastbare Anschlußteil 25 gedrückt wird, demnach zwischen den aneinanderliegenden Teilen Berührung gegeben ist, erfolgt die Abstützung bei dem Ausführungsbeispiel gemäß Figur 9 dadurch, daß etwa auf halber Länge des Grundkörpers 11 ein erstes elastisches Element 41 aufgesetzt ist, welches mit der einen Stirnfläche an einem Bund 42 anliegt und daß an den beiden Enden des Grundkörpers bzw. der Griffhülse zweite und dritte elastische Elemente 43, 44 vorhanden sind, welche dafür sorgen, daß die Griffhülse 'schwimmend' am Grundkörper fixiert ist, demnach keine direkte Berührung mit dem Grundkörper 11 und dem Anschlußteil 25 gegeben ist. Das etwa mittig angeordnete Element 41 ist ein elastisches Formteil, welches praktisch den gesamten Ringraum zwischen Rohrkörper 11 und Griffhülse ausfüllt und einerseits zur Verdrehsicherung und andererseits zur Fixierung des Lichtfaserbündels 21 dient. Das Element 43 ist ebenfalls ein Formteil, welches den Hohlraum zwischen Grundkörper 11 und Griffhülse ausfüllt und die Anschlußnippel für die Medienleitungen 22 bzw. 23 umschließt. Das elastische Element 44 ist ein einfacher O-Ring, der lediglich dafür sorgt, daß im rückwärtigen Bereich des Handstückes die Griffhülse auf Abstand zum Grundkörper bleibt.

Der Bund 42, an dem das elastische Element 41 zur axialen Fixierung des Grundkörpers 11 anliegt, kann Bestandteil der Hülse, z.B. an dieser angeformt, sein; er kann auch, wie in Figur 10 gezeigt, durch einen separaten konischen Ring 45 gebildet sein, der in der Hülse 1 z.B. durch Kleben oder Schweißen befestigt ist.

Alternativ zu der in Figur 9 gezeigten Konstruktion ist es denkbar, auch die in den Figuren 2 und 4 dargestellte Ausführung 'schwimmend' auszubilden. Hierzu ist es in Betrachtung der Figuren 2 und 4 denkbar, zwischen dem Bund 34 der Ringhülse 18 und der entsprechenden stirnseitigen Anlagefläche an der ringförmigen Aufweitung ein erstes elastisches Element und am gegenüberliegenden Ende der Griffhülse zwischen der schrägen Fläche 33 und der korrespondierenden Fläche am Anschlußteil 25 ein zweites elastisches Element in Form von O-Ringen 46, 47 vorzusehen. Das Element 46 kann auch als Formteil, wie in Figur 9 mit 43 bezeichnet, ausgebildet sein. Eine solche Lösung ist jedoch insofern nicht so vorteilhaft wie die zuvor beschriebene, weil keine eindeutige axiale Fixierung zwischen Grundkörper und Griffhülse gegeben wäre, wie dies bei dem in Figur 9 gezeigten Ausführungsbeispiel durch die Teile 41, 44 gegeben ist.

Die axiale Verspannung der Teile 1 und 11 ist insofern von Bedeutung, als es damit möglich ist, Grundkörper und Griffhülse als Ganzes zu sterilisieren. Hierzu brauchen lediglich Kopfteil 2 und Anschlußarmatur 5 axial abgezogen zu werden, die in bekannter Weise mit einer Rastvorrichtung am Grundkörper lösbar befestigt sind. Die Anschlußarmatur 5 beinhaltet vorteilhafterweise gleichsam den in Figur 2 gestrichelt eingezeichneten Antriebsmotor 12, der patronenartig in den dafür vorgesehenen Raum 48 eingeführt und mittels einer geeigneten Kugelrastung 49 in einer Stellung, in der die Kupplung 50 des Triebwellenabschnittes 13 mit der Motorwelle in Eingriff steht, axial gehalten wird. Zur Verdrehsicherung dieser in den Grundkörper 11 einsteckbaren Antriebseinheit ist der Grundkörper mit einem Schlitz 51 versehen, in dem ein (nicht dargestellter) Vorsprung der Antriebseinheit eingreift.

## Patentansprüche

1. Zahnärztliches Handstück mit Griffhülse, welches einen ein- oder mehrteiligen Grundkörper (11) enthält, der in seinem Inneren einen Triebwellenabschnitt (13) und dessen Lager (15) aufnimmt und der an seiner Peripherie Stütz- und Halteelemente (19, 20, 22) zur Fixierung von außen entlang des Grundkörpers (11) geführten Leitungen (21 bis 23) zur Führung diverser Medien, wie Luft und/oder Wasser und/oder elektrischen Strom und/oder Licht enthält, dadurch gekennzeichnet, daß auf den Gründkörper (11) eine nur die Hüllfunktion erfüllende und deshalb von Halte- und Führungselementen für Medienleitungen freie Griffhülse (1) aufsetzbar ist, daß diese sich im wesentlichen nur an zwei, vorzugsweise im Endbereich liegenden Stellen am Grundkörper (11) abstützt, ansonsten gegenüber diesem einen Zwischenraum bildet, in welchem die Medienleitungen (21 bis 23) angeordnet sind, wobei die eine Abstützung durch einen dem Grundkörper (11) zugeordneten Ringbund (34) gebildet ist, gegen den die Griffhülse anliegt, und die andere Abstützung durch ein die Enden der Medienleitungen (21 bis 23) aufnehmendes Trägerteil (25) gebildet ist, welches mittels eines Zapfens (30) in eine Ausnehmung (31) am Grundkörper (11) eingreift und so einen Anschlag bildet und welches mittels einer Fläche (32) am einen Ende der Griffhülse (1) anliegt.

2. Zahnärztliches Handstück nach Anspruch 1, bei dem der Ringbund (34) Bestandteil eines auf den Grundkörper (11) aufschraubbaren Ringes (18) ist.

3. Zahnärztliches Handstück nach Anspruch 2, bei dem zwischen Ringbund (34) und Griffhülse (1) ein elastisches Element (47) eingelegt ist.

4. Zahnärztliches Handstück nach Anspruch 1, bei dem die Griffhülse (1) mit einer Anlagefläche (33, 42) versehen ist, gegen die zur axialen Fixierung der Griffhülse der Grundkörper (11) unter Zwischenlage eines elastischen Elements (41, 46) anliegt.

5. Zahnärztliches Handstück nach Anspruch 1, bei dem das Trägerteil (25) Austrittsöffnungen (26, 27) für die Medienleitungen (21 bis 23) für Luft und/oder Wasser und/oder Licht, letzteres vorzugsweise in Form eines Lichtleiters, enthält.

6. Zahnärztliches Handstück nach Anspruch 1, bei dem das Trägerteil (25) hufeisenförmig ausgebildet ist und den Grundkörper (11) so umgibt, daß die äußere Kontur des Trägerteils (25) bündig mit den benachbarten Handstückflächen verläuft.

7. Zahnärztliches Handstück mit Griffhülse, welches einen ein- oder mehrteiligen Grundkörper (11) enthält, der in seinem Inneren einen Triebwellenabschnitt (13) und dessen Lager (15) aufnimmt und der an seiner Peripherie Stütz- und Halteelemente (19, 20, 22) zur Fixierung von außen entlang des Grundkörpers (11) geführten Leitungen (21 bis 23) zur Führung diverser Medien, wie Luft und/oder Wasser und/oder elektrischen Strom und/oder Licht enthält dadurch gekennzeichnet, daß auf den Grundkörper (11) eine nur die Hülbfunktion erfüllende und deshalb von Halte- und Führungselementen für Medienleitungen freie Griffhülse (1) aufsetzbar ist, daß diese sich im wesentlichen nur an zwei, vorzugsweise im Endbereich liegenden Stellen am Grundkörper (11) abstützt, ansonsten gegenüber diesem einen Zwischenraum bildet, in welchem die Medienleitungen (21 bis 23) angeordnet sind, wobei zwischen einem etwa auf halber Länge des Grundkörpers (11) und korrespondierend dazu an der Griffhülse (1) angeordneten Bund (42) ein erstes elastisches Element (41) angeordnet ist, und an dem dem Kopfteil (2) zugewandten Ende der Griffhülse zwischen einer schrägen Fläche (33) der Griffhülse ein zweites elastisches Element (43) vorgesehen ist, wobei beide Elemente (41, 43) die Griffhülse (1) gegenüber dem Grundkörper (11) axial und radial festlegen.

8. Zahnärztliches Handstück nach Anspruch 7, bei dem das zweite elastische Element (43) am kopfteilseitigen Ende des Grundkörpers (11) ein Formteil ist, welches den Zwischenraum zwischen Grundkörper (11) und Griffhülse (1) ausfüllt.

9. Zahnärztliches Handstück nach Anspruch 7, bei dem der Bund (42) für die Anlage des ersten elastischen Elements (41) durch einen separaten, in der Griffhülse (1) befestigten Ring (45) gebildet ist.

10. Zahnärztliches Handstück mit Griffhülse, welches einen ein- oder mehrteiligen Grundkörper (11) enthält, der in seinem Inneren einen Triebwellenabschnitt (13) und dessen Lager (15) aufnimmt und der an seiner Peripherie Stütz- und Halteelemente (19, 20, 22) zur Fixierung von außen entlang des Grundkörpers (11) geführten Leitungen (21 bis 23) zur Führung diverser Medien, wie Luft und/oder Wasser und/oder elektrischen Strom und/oder Licht enthält, dadurch gekennzeichnet, daß auf den Grundkörper (11) eine nur die Hüllfunktion erfüllende und deshalb von Halte-ud Führungselementen für Medienleitungen freie Griffhülse (1) aufsetzbar ist, daß diese sich im wesentlichen nur an zwei, vorzugsweise im Endbereich liegenden Stellen am Grundkörper (11) abstützt, ansonsten gegenüber diesem einen Zwischenraum bildet, in welchem die Medienleitungen (21 bis 23) angeordnet sind, wobei dem Grundkörper (11) mehrere Griffhülsen (Fig. 7, Fig. 8) mit unterschiedlichen äußeren Konturen, jedoch jeweils gleich ausgebildeten Anschlußelementen (29, 33, 35) zugeordnet sind.

11. Zahnärztliches Handstück nach einem der Ansprüche 1 bis 10, bei dem die Griffhülse aus einer Titan-Legierung besteht.

12. Zahnärztliches Handstück nach einem der Ansprüche 1 bis 10, bei dem die Griffhülse vorzugsweise aus sterilisierbarem Kunststoff besteht.

13. Zahnärztliches Handstück nach einem der Ansprüche 1 bis 12, bei dem bei einer im Inneren des Handstückes angeordneten Antriebseinheit (12) die Griffhülse (1) die Antriebseinheit über die gesamte Länge übergreift.

## Claims

1. A dental handpiece with a gripping sleeve, which contains a one-part or multi-part base body (11), which accommodates in its interior a drive shaft section (13) and the bearing (15) thereof and which contains on its periphery supporting and holding elements (19,20,22) for fixing lines (21 to 23) guided from outside along the base body (11) for guiding diverse agents, such as air and/or water and/or electric current and/or light, characterised in that a gripping sleeve (1) is able to be placed on the base body (11), said gripping sleeve only fulfilling the sleeve function and therefore free of holding and guiding elements for the agent lines, in that this is supported substantially only at two points on the base body (11), preferably in the end region, or otherwise forms an intermediate space opposite this, in which the agent lines (21 to 23) are arranged, wherein the one support is formed by an annular band (34) associated with the base body (11), against which the gripping sleeve rests, and the other support is formed by a carrier part (25) receiving the ends of the agent lines (21 to 23), which engages by means of a plug (30) into a recess (31) on the base body (11), and thus forms a stop, and which rests by means of face (32) on one end of the gripping sleeve (1).

2. A dental handpiece according to claim 1, in which the annular band (34) is a component part of a ring (18) able to be screwed onto the base body (11).

3. A dental handpiece according to claim 2, in which between the annular band (34) and gripping sleeve (1) there is embedded an elastic element.

4. A dental handpiece according to claim 1 in which the gripping sleeve (1) is provided with a stop face (33, 42) against which, for axial fixing of the gripping sleeve, there rests the base body (11) with an intermediate layer of an elastic element (41, 46).

5. A dental handpiece according to claim 1, in which the carrier part (25) contains outlet openings (26, 27) for the agent lines (21 to 23) for air and/or water and/or light, the latter preferably being in the form of a light conductor.

6. A dental handpiece according to claim 1, in which the carrier part (25) is formed like a horseshoe and surrounds the base body (11) so that the outer contour of the carrier part (25) extends flush with the adjacent handpiece faces.

7. A dental handpiece with gripping sleeve, which contains a one-part or multi-part base body (11), which accommodates in its interior a drive shaft section (13) and the bearing (15) thereof and which contains on its periphery supporting and holding elements (19, 20, 22) for fixing lines (21 to 23) guided from outside along the base body (11) for guiding diverse agents, such as air and/or water and/or electric current and/or light,
characterised in that a gripping sleeve (1) is able to be placed on the base body (11), said gripping sleeve only fulfilling the sleeve function and therefore free of holding and guiding elements for the agent lines, in that this is supported substantially only at two points on the base body (11), preferably in the end region, or otherwise forms an intermediate space opposite this, in which the agent lines (21 to 23) are arranged, wherein arranged between a band (42), over approximately half the length of the base body (11), and arranged corresponding thereto on the gripping sleeve (1), there is a first elastic element (41) and on the end of the gripping sleeve facing the head part (2), between an inclined face (33) of the gripping sleeve there is provided a second elastic element (43), wherein both elements (41, 43) secure the gripping sleeve (1), relative to the base body (11) axially and radially.

8. A dental handpiece according to claim 7, in which the second elastic element (43) is a moulded part on the head part side end of the base body (11), which fills out the intermediate space between the base body (11) and the gripping sleeve (1).

9. A dental handpiece according to claim 7, in which the band (42) for the bearing of the first elastic element (41) is formed by a separate ring (45) secured in the gripping sleeve (1).

10. A dental handpiece with a gripping sleeve which contains a one-part or multi-part base body (11), which accommodates in its interior a drive shaft section (13) and the bearing (15) thereof and which contains on its periphery supporting and holding elements (19,20,22) for fixing lines (21 to 23) guided from outside along the base body (11) for guiding diverse agents, such as air and/or water and/or electric current and/or light,
characterised in that a gripping sleeve (1) is able to be placed on the base body (11), said gripping sleeve only fulfilling the sleeve function and therefore free of holding and guiding elements for the agent lines, in that this is supported substantially only at two points on the base body (11), preferably in the end region, or otherwise forms an intermediate space opposite this, in which the agent lines (21 to 23) are arranged, wherein associated with the base body (11) there are several gripping sleeves (Figure 7, Figure 8) with various outer contours, in each case, however, with similarly formed connecting elements (29, 33,35).

11. A dental handpiece according to one of claims 1 to 10, in which the gripping sleeve consists of a titanium alloy.

12. A dental handpiece according to one of claims 1 to 10, in which the gripping sleeve preferably consists of sterilised plastics.

13. A dental handpiece according to one of claims 1 to 12, in which with one drive unit (12) arranged in the interior of the handpiece, the gripping sleeve (1) grips over the drive unit along the whole length.

## Revendications

1. Pièce à main de dentisterie comportant une douille de préhension et contenant un corps de base (11) formé d'un ou de plusieurs éléments et qui loge en son intérieur un bout d'arbre mené (13) et son palier (15) et contient, au niveau de sa périphérie, des éléments de support et de retenue (19,20,22) servant à fixer des canalisations et lignes (21 à 23) guidées de l'extérieur le long du corps de base (11) pour l'alimentation de différents milieux comme par exemple de l'air et/ou de l'eau et/ou un courant électrique et/ou une lumière, caractérisée par le fait que sur le corps de base (11) peut être emmanchée une douille de préhension (1) ayant uniquement le rôle d'une coque et donc ne comportant aucun élément de retenue et de guidage pour les canalisations et lignes de transmission des milieux, que cette douille prend appui essentiellement seulement en deux emplacements, situés de préférence dans la zone d'extrémité du corps de base (11), et délimite, ailleurs, avec ce corps un espace intercalaire dans lequel sont disposées les canalisations et lignes (21 à 23) de transmission des milieux, un support étant formé par un collet annulaire (34) associé au corps de base (11) et contre lequel s'applique la douille de préhension, tandis que l'autre support est formé par un élément de support (25), qui loge les extrémités des canalisations et lignes (21 à 23) de transmission des fluides, s'engage au moyen d'un téton (30) dans un logement (31) ménagé dans le corps de base (11) en formant ainsi une butée et s'applique, au moyen d'une surface (32), contre une extrémité de la douille de préhension (1).

2. Pièce à main de dentisterie suivant la revendication 1, dans laquelle le collet annulaire (34) fait partie d'un anneau (18) vissable sur le corps de base (11).

3. Pièce à main de dentisterie suivant la revendication 2, dans laquelle un élément élastique (47) est inséré entre le collet annulaire (34) et la douille de préhension (1).

4. Pièce à main de dentisterie suivant la revendication 1, dans laquelle la douille de préhension (1) comporte une surface d'application (33,42), contre laquelle s'applique le corps de base (11), moyennant l'interposition d'un élément élastique (41,46), pour la fixation axiale de la douille de préhension.

5. Pièce à main de dentisterie suivant la revendication 1, dans laquelle l'élément de support (21) comporte des ouvertures de sortie (26,27) pour les canalisations ou lignes (21 à 23) de transmission des milieux et prévues pour l'air et/ou la lumière, la transmission de la lumière s'effectuant de préférence à la manière d'un guide de lumière.

6. Pièce à main de dentisterie suivant la revendication 1, dans laquelle l'élément de support (25) est réalisé en forme de fer à cheval et entoure le corps de base (11) de sorte que le contour extérieur de l'élément de support (25) est de niveau avec les surfaces voisines de la pièce à main.

7. Pièce à main de dentisterie comportant une douille de préhension et contenant un corps de base (11) formé d'un ou de plusieurs éléments et qui loge en son intérieur un bout d'arbre mené (13) et son palier (15) et contient, au niveau de sa périphérie, des éléments de support et de retenue (19,20,22) servant à fixer des canalisations et lignes (21 à 23) guidées de l'extérieur le long du corps de base (11) et pour l'alimentation de différents milieux comme par exemple de l'air et/ou de l'eau et/ou un courant électrique et/ou une lumière, caractérisée par le fait que sur le corps de base (11) peut être emmanchée une douille de préhension (1) ayant uniquement le rôle d'une coque et donc ne comportant aucun élément de retenue et de guidage pour les canalisations et lignes de transmission des milieux, que cette douille prend appui essentiellement seulement en deux emplacements, situés de préférence dans la zone d'extrémité du corps de base (11), et délimite, ailleurs, avec ce corps un espace intercalaire dans lequel sont disposées les canalisations et lignes (21 à 23) de transmission des milieux, un premier élément élastique (41) étant disposé contre un collet (42) s'étendant approximativement sur la moitié de la longueur du corps de base (11) et étant disposé, de façon correspondante, sur la douille de préhension (1), tandis qu'un second élément élastique (43) est prévu sur l'extrémité, tournée vers la partie de tête (2), de la douille de préhension, contre une surface oblique (33) de la douille de préhension, les deux éléments (41,43) fixant axialement et radialement la douille de préhension (1) par rapport au corps de base (11).

8. Pièce à main de dentisterie suivant la revendication 7, dans laquelle le second élément élastique (43) situé sur l'extrémité, tournée vers la partie de tête, du corps de base (11) est une pièce de forme qui remplit l'espace intercalaire présent entre le corps de base (11) et la douille de préhension (1).

9. Pièce à main de dentisterie suivant la revendication 7, dans laquelle le collet (42), contre lequel s'applique le premier élément élastique (41), est formé par une bague séparée (45) fixée dans la douille de préhension.

10. Pièce à main de dentisterie comportant une douille de préhension et contenant un corps de base (11) formé d'un ou de plusieurs éléments et qui loge en son intérieur un bout d'arbre mené (13) et son palier (15) et contient, au niveau de sa périphérie, des éléments de support et de retenue (19,20,22) servant à fixer des canalisations et lignes (21 à 23) guidées de l'extérieur le long du corps de base (11) pour l'alimentation de différents milieux comme par exemple de l'air et/ou de l'eau et/ou un courant électrique et/ou une lumière, caractérisée par le fait que sur le corps de base (11) peut être emmanchée une douille de préhension (1) ayant uniquement le rôle d'une coque et donc ne comportant aucun élément de retenue et de guidage pour les canalisations et lignes de transmission des milieux, que cette douille prend appui essentiellement seulement en deux emplacements, situés de préférence dans la zone d'extrémité du corps de base (11), et délimite, ailleurs, avec ce corps un espace intercalaire dans lequel sont disposées les canalisations et lignes (21 à 23) de transmission des milieux, plusieurs douilles de préhension (figures 7,8) possédant des contours extérieurs différents, alors que respectivement des éléments identiques de raccordement (29,33,35) sont associés au corps de base (11).

11. Pièce à main de dentisterie suivant l'une des revendications 1 à 10, dans laquelle la douille de préhension est formée d'un alliage au titane.

12. Pièce à main de dentisterie suivant l'une des revendications 1 à 10, dans laquelle la douille de préhension est réalisée de préférence en une matière plastique stérilisable.

13. Pièce à main de dentisterie suivant l'une des revendications 1 à 12, dans laquelle, dans le cas où une unité d'entraînement (12) est installée à l'intérieur de la pièce à main, la douille de préhension (1) enserre sur toute sa longueur l'unité d'entraînement.

FIG 1

FIG 2

FIG 3

FIG 4

FIG 5

FIG 6

FIG 7

FIG 8

FIG 9

FIG 10

EP 0 282 752 B1